# EUROPEAN PATENT SPECIFICATION

(11) **EP 1 193 424 B1**
(45) Date of publication and mention of the grant of the patent: **28.04.2004**
(21) Application number: 01203538.2
(22) Date of filing: 18.09.2001
(51) Int. Cl.: F16H 61/02, F16H 59/44, F16H 61/16

(54) **A vehicle gear transmission**
Fahrzeuggetriebe
Transmission de véhicule

(30) Priority: 18.09.2000 JP 2000281577
(43) Date of publication of application: 03.04.2002
(73) Proprietor: Aisin Seiki Kabushiki Kaisha, Kariya-shi, Aichi-ken (JP); AISIN AI Co., Ltd., Nishio-shi, Aichi-ken (JP)
(72) Inventor: Shimizu, Takayuki, Hashima-shi, Gifu-ken (JP); Shimizu, Masaru, Toyota-shi, Aichi-ken (JP); Taguchi, Yoshinori, Anjo-shi, Aichi-ken (JP); Haneda, Yoshitomi, Anjo-shi, Aichi-ken (JP); Tozu, Kenji, Yokkaichi-shi, Mie-ken (JP); Hosoi, Yasuhiro, Gamagori-shi, Aichi-ken (JP); Miyagawa, Hiroshi, Nagoya-shi, Aichi-ken (JP); Miyazaki, Takeshige, Anjo-shi, Aichi-ken (JP); Aoyama, Yoshiyuki, Nishio-shi, Aichi-ken (JP); Itoh, Yoshiki, Nukata-gun, Aichi-ken (JP)
(74) Representative: Marshall, John Grahame

(56) References cited:
- EP-A- 0 524 767
- DE-A- 19 740 647
- US-A- 5 315 514
- US-A- 5 545 108
- US-A- 6 080 083

## Description

### FIELD OF THE INVENTION

This invention generally relates to a vehicle gear transmission. More particularly, this invention pertains to a vehicle gear transmission in which switching operation is performed between an automatic shift mode and a manual shift mode. Further, this invention pertains to a vehicle gear transmission which performs a manual shift operation based upon a driver's shift operation under a manual shift mode.

### BACKGROUND OF THE INVENTION

A vehicle gear transmission is disclosed in a Japanese Patent Laid-open application 11(1999)-351374. When a shift mode of this disclosed vehicle gear transmission is switched from an automatic shift mode to a manual shift mode in the case that a selected shift stage which existed at the end of the automatic shift mode is equal to or higher than a predetermined shift stage, a shift-down operation is performed. The shift-down is from the shift stage selected at the end of the automatic shift mode to only a single lower shift stage. When the shift mode of this disclosed vehicle gear transmission is switched from the automatic shift mode to the manual shift mode in the case that the shift stage selected at the end of the automatic shift mode is lower than the predetermined shift stage, the shift stage selected at the end of the automatic shift mode is operatively maintained. Therefore, an undesired shift-down operation corresponding to the switching operation to the manual shift mode is prevented so that a shift-down operation is desirably performed when it is needed.

The present invention is based on the. observation, by the inventors of the invention, that according to the above-described vehicle gear transmission, when the shift mode is switched from the automatic shift mode to the manual shift mode in the case that the shift stage selected at the end of the automatic shift mode is equal to or higher than the predetermined shift stage, the shift-down operation to one shift stage lower takes place even when it is not needed, for example when the vehicle is traveling below a predetermined speed (e.g. 70 Km/h) on a freeway.
It is thus seen that the above-described type transmissions are susceptible of certain improvements with respect to perform a desired shift-down operation only when it is needed.

### SUMMARY OF THE INVENTION

The invention provides a vehicle gear transmission which is switchable by a switching means between an automatic shift mode and a manual shift mode, comprising
a switch mode judging means for judging that the transmission has been switched from the automatic shift mode to the manual shift mode by the switching means,
a switch stage identification means for identifying an existing shift stage of the transmission as it is switched from the automatic shift mode to the manual shift mode by the switching means, and
a shift-down operating means for shifting-down the transmission from the existing shift stage only when
   (a) the switch mode judging means judges that the automatic shift mode has been switched to the manual shift mode by the switching means and
   (b) the shift stage identification means judges that the existing shift stage of the transmission is equal to or higher than a predetermined shift stage as the transmission is switched from the automatic shift mode to the manual shift mode, and
   (c) a vehicle speed judging means judges that the vehicle speedof a vehicle incorporating the transmission is higher than a predetermined vehicle speed.

In a further embodiment of the invention, the vehicle gear transmission includes a time judging means associated with the vehicle speed judging means for judging that the vehicle has been running at a vehicle speed higher than the predetermined speed for longer than a predetermined period of time, wherein the shift-down operating means shifts-down the shift stage of the transmission from the existing shift stage only when:
(a) the switch mode judging means judges that the automatic shift mode has been switched to the manual shift mode by the switching means;
(b) the shift stage identification means judges that the existing shift stage of the transmission is equal to or higher than the predetermined shift stage as the transmission is switched from the automatic shift mode to the manual shift mode; and
(c) the time judging means judges that the vehicle has been running at a vehicle speed higher than the predetermined speed for longer than the predetermined period of time.

In a yet further embodiment of the invention the shift-down operating means also includes a vehicle speed changing ratio judging means for judging that an absolute value of a changing ratio of the vehicle speed is smaller than a predetermined changing ratio, and the shift-down operating means shifts-down the shift stage of the transmission from the existing shift stage only when:
(a) the switch mode judging means judges that the automatic shift mode has been switched to the manual shift mode by the switching means;
(b) the shift stage identification means judges that the existing shift stage of the transmission (30) is equal to or higher than the predetermined shift stage as the transmission is switched from the automatic shift mode to the manual shift mode;
(c) the time judging means judges that the vehicle has been running at a vehicle speed higher than the predetermined speed for longer than the predetermined period of time; and
(d) the vehicle speed changing ratio judging means judges that the absolute value of the changing ratio of the vehicle speed is smaller than the predetermined changing ratio.

### BRIEF DESCRIPTION OF THE DRAWING FIGURES

An embodiment of the invention is illustrated in the accompanying drawings, in which :
Fig. 1 is a schematic block view illustrating a vehicle driving mechanism employing a vehicle gear transmission according to an embodiment of the present invention ;
Fig. 2 is a schematic view illustrating a biaxial type gear transmission shown in Fig 1 ;
Fig. 3 is a drawing illustrating a shift pattern of a shift lever operating the biaxial type gear transmission shown in Figs. 1 and 2 ;
Fig. 4 is a flow chart showing a program performed by an electric controller shown in Fig. 1 ;
Fig. 5 is a flow chart showing a sub-routine of an overdrive cut shown in Fig. 4 ; and
Fig. 6 is a flow chart showing a sub-routine of a manual shift operation shown in Fig. 4.

### DETAILED DESCRIPTION OF THE INVENTION

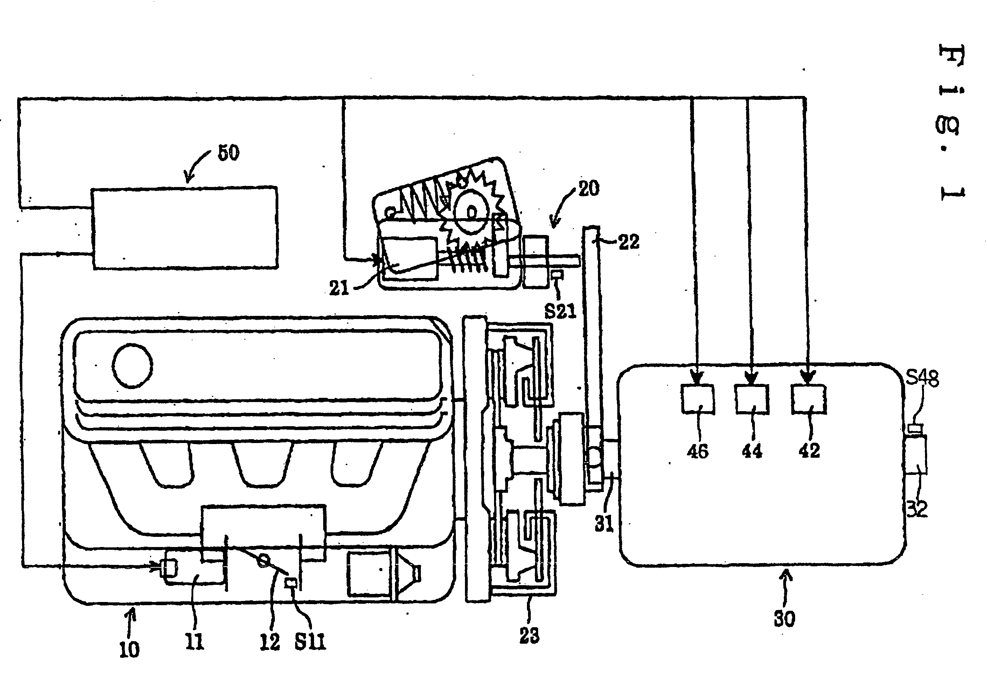

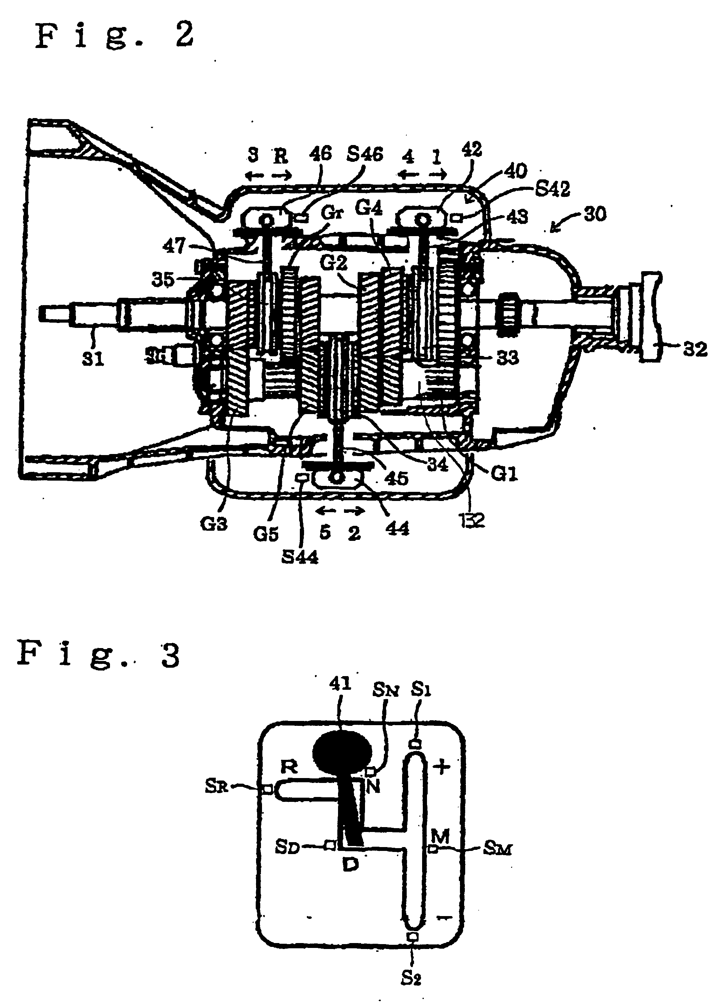

As shown in Fig. 1, the vehicle gear transmission includes an engine 10, an automatic clutch 20 fixed to an output portion of the engine 10, and a transmission 30. The transmission 30 is connected to the engine 10 via the automatic clutch 20. The automatic clutch 20 and the transmission 30 are controlled by an electric controller 50 corresponding to an operation of a shift lever 41 as a switching means (shown in Fig. 3).

The engine 10 is provided with a throttle valve 12 controlled by an electric actuator 11 for the engine 10. The operation of the electric actuator 11 is controlled by the electric controller 50 so as to control outputted force from the engine 10. The engine 10 is provided with a throttle valve sensor S 11 for detecting an operating position of the throttle valve 12, i.e. a valve opening degree of the throttle valve 12. The throttle valve sensor S11 is connected (not shown) to the electric controller 50 so as to input a detected signal from the throttle valve sensor S11 to the electric controller 50.

The automatic clutch 20 is provided with a clutch lever 22 moved by an electric actuator 21 for the automatic clutch 20. Operation of the electric actuator 21 is controlled by the electric controller 50 so as to control the movement of the clutch lever 22. Accordingly, a switching operation of a friction clutch 23 (a mechanical dry type- single disc clutch) is controlled so that power transmissiion from the engine 10 is established or interrupted. The automatic clutch 20 is provided with a clutch engaging sensor S21 for detecting a moving position of the clutch lever 22, i.e. an engaging condition of the friction clutch 23. The clutch engaging sensor S21 is connected (not shown) to the electric controller 50 so as to input a detected signal from the clutch engaging sensor S21 to the electric controller 50.

As shown in Fig. 1 and Fig. 2, the transmission 30 includes an input shaft 31, an output shaft 32, a counter shaft 132, three pairs of gear sets (G4 and G1, G5 and G2, G3 and Gr), and three sleeves 33, 34, 35 respectively disposed between the gear sets of each of the three pairs. The input shaft 31 and the output shaft 32 are disposed parallel to the counter shaft 132. The three pairs of gear sets are configured with a total of six shift gear sets G1 through G5 and Gr. The transmission 30 is a biaxial type gear transmission which is applicable for five forward shift stages and a single rearward shift stage. Respective first through fourth forward shift stages are an underdrive shift stage and a fifth forward shift stage is an overdrive shift stage. The input shaft 31 is connected to an output portion (a clutch disc) of the friction clutch 23 so as to establish a power transmission path. The output shaft 32 is connected to an axle shaft (not shown) so as to establish a power transmission path. Each sleeve 33, 34, and 35 is axially moved corresponding to an actuation of a shift operating mechanism 40, enabling the driving force to be transmitted via any of the six gear sets.

One of the pairs of gear sets, illustrated at the right side of Fig. 2, is a gear set G1 for a first shift stage and a gear set G4 for a fourth shift stage. The gear sets G1 and G4 face each other and the first sleeve 33 is disposed therebetween. A second pair of gear sets, illustrated at the middle of Fig. 2, is a gear set G2 for a second shift stage and a gear set G5 for a fifth shift stage. The gear sets G2 and G5 face each other and the second sleeve 34 is disposed therebetween. A third pair of gear sets, illustrated at the left side of Fig. 2, is a gear set G3 for a third shift stage and a gear set Gr for a reverse shift stage. The gear sets G3 and Gr face each other and the third sleeve 35 is disposed therebetween.

The shift operating mechanism 40 is provided with the shift lever 41 operated based upon a shift pattern shown in Fig. 3. The shift operating mechanism 40 further includes an electric actuator 42 for axially moving the first sleeve 33, a shift fork 43, an electric actuator 44 for axially moving the second sleeve 34, a shift fork 45, an electric actuator 46 for axially moving the third sleeve 35, and a shift fork 47. Operation of the respective electric actuators 42, 44, and 46 is controlled by the electric controller 50. Each of the respective electric actuators 42, 44, and 46 includes an electric motor with speed reduction gears, a pinion gear rotatably activated by the electric motor with the speed reduction gears. and a gear rack engaged with the pinion gear and integrally shifted with each shift fork 43, 45, 47.

The shift operating mechanism 40 further includes respective sensors S42, S44 and S46 for detecting a shifting position of each sleeve 33, 34, and 35, i.e. for detecting the power transmission path being engaged or interrupted via each gear set. Each sensor S42, S44 and S46 is connected (not shown) to the electric controller 50 so as to input a detected signal from each sensor S42, S44 and S46 to the electric controller 50.

Respective sensors SN, SR, SD, SM, S1, and S2 for detecting the operating position of the shift lever 41 are accommodated at each shift stage position (an N (neutral) range, a R (reverse) range, a D (drive) range, an M (manual) range, a positive (+) range, and a negative (-) range) of the shift lever 41. Each of the respective sensors SN, SR, SD, SM, S1, and S2 is connected (not shown) to the electric controller 50 so as to input a detected signal from each sensor SN, SR, SD, SM, S1, and S2 to the electric controller 50.

The sensor SN detects the shifting operation of the shift lever 41 to the N range, i.e. a neutral position, not for enabling the driving force to be transmitted from the engine 10 to the output shaft 32. The sensor SR detects the shifting operation of the shift lever 41 to the R range, i.e. to a position for establishing the power transmission path via the gear set Gr for the reverse shift stage. The sensor SD detects the shifting operation of the shift lever 41 to the D range, i.e. to a position for establishing the power transmission path via any of the gear sets G1 through G5 under the automatic shift mode. The sensor SM detects the shifting operation of the shift lever 41 to the M range, i.e. to a position for establishing the power transmission path via any of the gear sets G1 through G5 under the manual shift mode. The sensor S1 detects the shifting operation of the shift lever 41 to the positive (+) position, i.e. to a position for establishing the power transmission path via a shift-up gear set. The sensor S2 detects the shifting operation of the shift lever 41 to the negative (-) position, i.e. to a position for establishing the power transmission path via a shift-down gear set.

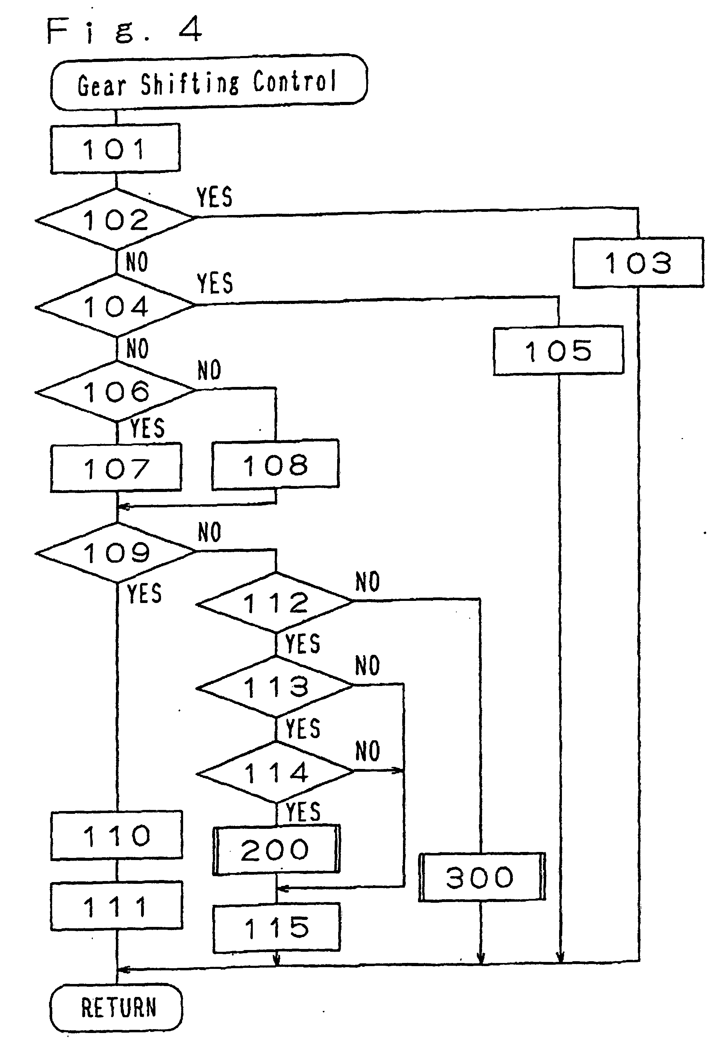

The electric controller 50 is provided with a well-known microcomputer as a main unit. The electric controller 50 receives detected signals from an output shaft rotation sensor S48 and the throttle valve sensor S11. Rotation of the output shaft 32 is detected by the output shaft rotation sensor S48 and the vehicle speed is calculated by the electric controller 50 based upon the detected rotation of the output shaft 32. Programs corresponding to each flow chart shown in Figs. 4 through 6 are performed based upon each of the respective detected signals by the sensors S11, S21, S42, S44, S46 for detecting each position of each member operated by each electric actuator 11, 21, 42, 44, and 46. Further, the programs are performed based upon each of the respective detected signals by the sensors SN, SR, SD, SM, S1, and S2 for detecting the operating condition of the shift lever 41 to each of the above-described shift positions. Each of the programs is repeatedly performed within a predetermined small period of time when the ignition switch is ON (being activated). Each of the respective electric actuators 11, 21, 42, 44, and 46 is operated based upon each of the detected signals by the respective above-described sensors. All actuator movements are under the control of the electric controller 50. And besides, the electric controller 50 provides a vehicle speed judging means, a switch mode judging means, a shift stage identification means, a shift-down operating means, a time judging means and a vehicle speed changing ratio judging means described as below.

Operations of the embodiment of the present invention with the above-described structure are described below with reference to the flow charts in Figs. 4, 5, and 6. When the shift lever 41 is maintained at the N range shown in Fig. 3 or shifted to the N range, Steps 101, 102, and 103 shown in Fig. 4 are repeatedly performed. The operation of each electric actuator 42, 44 and 46 is controlled to place each sleeve 33, 34, and 35 at an intermediate position so as not to establish the power transmission path via any of the gear sets. Further, the automatic clutch 20 is engaged under the control of the electric actuator 21, so that power is transmitted to the input shaft 31. All actuator movements are under the control of the electric controller 50.

At step 101 in Fig. 4, the detected signal by each sensor S11, S21, S42, S44, S46, S48, SN, SR, SD, SM, S1, and S2 is read by the electric controller 50. At step 102, the program judges if the shift lever 41 is located at the N range or not based upon the detected signals read at step 101. At step 103, an N signal is first outputted and each electric actuator 21, 42, 44, and 46 is operated as described above.

When the shift lever 41 is shifted from the N range to the R range shown in Fig. 3, steps 101, 102, 104 and 105 shown in Fig. 4 are repeatedly performed. The automatic clutch 20 is disengaged, so that the power is not transmitted to the input shaft 31. The sleeve 35 of the transmission 30 is shifted to a reverse shift stage position under the control of the electric actuator 46, wherein the power transmission path is established via the gear set Gr for the reverse shift stage. The automatic clutch 20 is then re-engaged under the control of the electric actuator 21. All actuator movements are under the control of the electric controller 50.

At step 104, the program judges if the shift lever 41 is located at the R range or not, based upon the detected signals read at step 101. At step 105, an R signal is first outputted and the electric actuators 21 and 46 are controlled as described above.

When the shift lever 41 is shifted to the D range from the N range or from the M range shown in Fig. 3, steps 101, 102, 104, 106, 107 or 108, 109, 110, and 111 shown in Fig. 4 are repeatedly performed. Each operation of the electric actuators 11, 21, 42, 44, and 46 is controlled corresponding to the vehicle driving condition, for example, the vehicle speed or the opening degree of the throttle valve 12, so that in this mode the transmission 30 is employed as an automatic gear transmission. When any shift operation is performed by the transmission 30 in the automatic transmission mode, the automatic clutch 20 is disengaged and the sleeves 33, 34, and 35 of the transmission 30 are shifted under the control of the electric actuators 42, 44, and 46. The automatic clutch 20 is then re-engaged under the control of the electric actuators 21. All the actuator movements are under the control of the electric controller 50.

Step 106 of Fig. 4 provides a vehicle speed judging means. The program judges if the vehicle speed is larger than a predetermined vehicle speed ( e.g. 70 Km/H) or not, based upon the detected signals read at step 101. When the vehicle speed is larger than the predetermined vehicle speed, the program proceeds to step 107, wherein a speed judgment timer is increased. When the vehicle speed is not larger than the predetermined vehicle speed, the program proceeds to step 108. wherein the speed judgment timer is cleared to zero. Hereinafter, "the speed judgment time" represents a continuous period of time during which the vehicle has run at above the predetermined vehicle speed. At step 109, the program judges if the shift lever 41 is located at the D range or not, based upon the detected signals read at step 101. At step 110, a flag is placed indicating the automatic shift mode. At step 111, automatic shift operations are performed based upon the vehicle speed and the opening degree of the throttle valve 12 and each electric actuator 11, 21, 42, 44, and 46 is controlled as described above.

When the shift lever 41 is shifted from the D range to the M range, steps 101, 102, 104, 106, 107 or 108, 109, 112, 113, 114, 200, and 115 are repeatedly performed. Each electric actuator 11, 21, 42, 44, and 46 is controlled corresponding to a condition of the gear sets of the transmission 30 when the shift lever 41 was shifted to the M range, wherein the transmission 30 is switched from the automatic gear transmission to a manual gear transmission. Whereas in the automatic mode the gear transmission is a transmission applicable for the automatic shift mode for shifting corresponding to the vehicle running condition, in the manual mode the gear transmission is a transmission applicable for shifting in response to a manual operation of the shift lever 41 by the driver.

Step 112 provides a switch mode judging means. The program judges if the shift lever 41 is located at the M range or not, based upon the detected signals read at step 101. Step 113 provides a time judging means. The program judges if the speed judgment time increased at step 107 is longer (larger) than a predetermined period of time or not. When the speed judgment time is longer (larger) than the predetermined period of time, the program proceeds to step 114. When the speed judgment time is not longer (larger) than the predetermined period of time, the program proceeds to step 115. Step 114 provides a vehicle speed changing ratio judging means. The program judges if an absolute value of a changing ratio of the vehicle speed is smaller than a predetermined changing ratio or not, based upon the detected signal by the output shaft rotation sensor S48. When the absolute value of the changing ratio of the vehicle speed is smaller than the predetermined changing ratio, a sub-routine of an overdrive cut is performed at step 200. When the absolute value of the changing ratio of the vehicle speed is not smaller than the predetermined changing ratio, the program proceeds to step 115, wherein the flag indicating the automatic shift mode is canceled. Moreover, the changing ratio of the vehicle speed is equal to an acceleration of the vehicle.

Therefore, when (i) the shift lever 41 is shifted from the D range (the automatic shift mode) to the M range (the manual shift mode); (ii) the vehicle speed is higher than the predetermined vehicle speed and the judgment timer is longer than the predetermined period of time; and (iii) the absolute value of the changing ratio of the vehicle speed is smaller than the predetermined changing ratio, the sub-routine of the overdrive cut is performed at step 200.

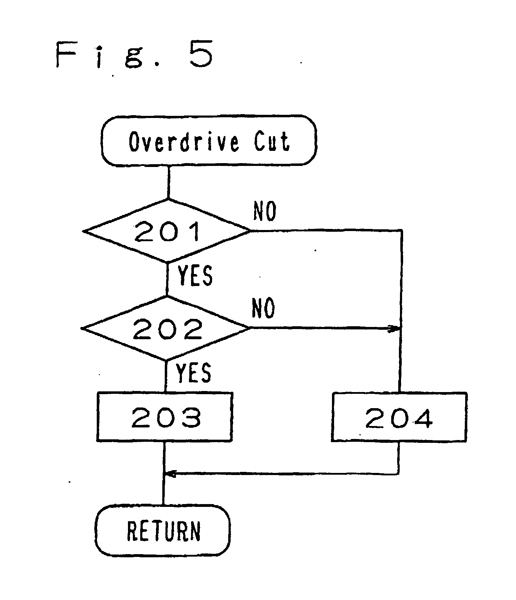

Steps 201, 202, 203, and 204 shown in Fig. 5 show more details about the sub-routine of the overdrive cut performed at step 200. At step 201, the program judges if the flag is placed at "the automatic shift mode" or not. When the flag is placed at "the automatic shift mode", the program proceeds to step 202. If not, the program proceeds to step 204. Step 202 provides a shift stage identification means. The overdrive shift stage (the fifth shift stage) In this embodiment of the invention corresponds to the predetermined shift stage in the claims. The program judges if the selected shift stage of the transmission 30 is "the overdrive shift stage (the fifth shift stage)" or not, based upon the detected signal by the sensor S44 provided in the transmission 30. When the selected shift stage of the transmission 30 is "the overdrive shift stage (the fifth shift stage)", the program proceeds to step 203. If not, the program proceeds to step 204.

Step 203 as shown in Fig. 5 provides a shift-down operating means. A signal is outputted for indicating a shift-down operation. The clutch 20 is disengaged with the throttle valve 12 being closed, so that the power is not transmitted from the engine 10 to the input shaft 31. The sleeves 33 and 34 are shifted by the corresponding electric actuators 42 and 44, enabling the power to be transmitted via the gear set G4 for the fourth shift stage. The automatic clutch 20 is then re-engaged with the throttle valve 12 being opened under the control of the electric actuators 21, 42, and 44. Therefore, a shift-down operation is performed from the overdrive shift stage, i.e. the fifth shift stage, to the fourth shift stage. All the actuator movements are under the control of the electric controller 50. At step 204, the program maintains the currently selected shift stage, so that none of the gear shift operations is performed.

As described above, when the shift lever 41 is shifted from the D range (the automatic shift mode) to the M range (the manual shift mode) and when (1) the selected shift stage of the transmission 30 is the overdrive shift stage, i.e. the fifth shift stage; (2) the vehicle has been running at a higher vehicle speed than the predetermined vehicle speed (e.g. 70 Km/H) for a longer time than the predetermined period of time; and (3) the absolute value of the changing ratio of the vehicle speed is smaller than the predetermined changing ratio, the shift-down operation is performed from the overdrive shift stage, i.e. the fifth shift stage, to the fourth shift stage.

When the shift lever 41 is shifted from the D range to the M range and the above conditions (a) and (b) are met, but condition (c) is not met because the absolute changing ratio of the vehicle speed is increased by the operation of the vehicle's accelerator pedal (not shown) by the driver, the shift-down operation is not performed from the overdrive shift stage to the fourth shift stage. Therefore, when the vehicle is accelerated or decelerated by the driver's intentional operation, undesirable shift-down against the driver's intention can be prevented so that the drivability is improved.

When the shift lever 41 is shifted to the positive (+) range or to the negative (-) range from the M range, steps 101, 102, 104, 106, 107 or 108, 109, 112, and 300 are performed. Every time when the shift lever 41 is shifted to the positive (+) range or to the negative (-) range, any of the shift-up operation, the shift-down operation, or the shift maintaining operation is performed. If the shift lever 41 is released from the driver's manual operation after the shift lever 41 has been shifted to the positive (+) range or to the negative (-) range from the M range, the shift lever 41 is automatically returned to the M range.

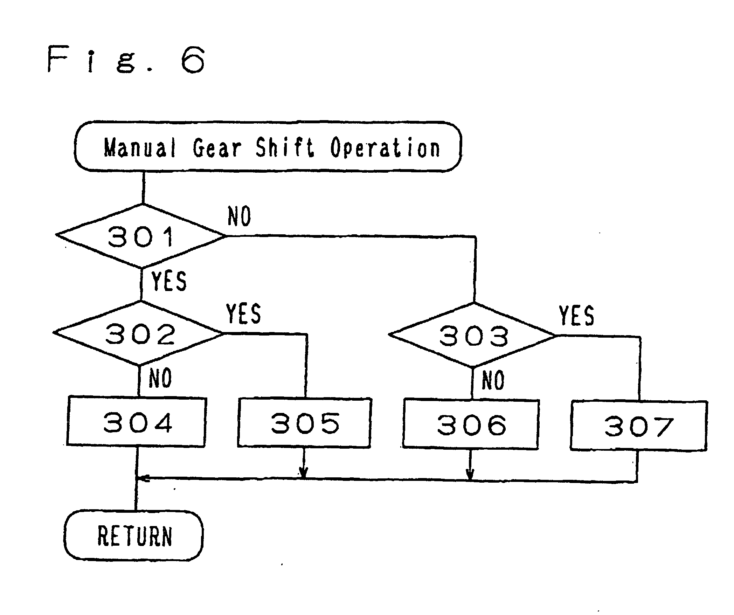

Steps 301, 302, 303, 304, 305, 306, and 307 shown in Fig. 6 show more details about a sub-routine of the manual gear shift operation performed at step 300. At step 301, the program judges if the shift lever 41 is located at the negative (-) range or not, based upon the detected signals read at step 101. When the shift lever 41 is located at the negative (-) range, the program proceeds to step 302. When the shift lever 41 is not located at the negative (-) range, i.e. when the shift lever 41 is located at the positive (+) range, the program proceeds to step 303.

At step 302, the program judges if the selected shift stage of the transmission 30 is the first shift stage or not, based upon the detected signal by the sensor S42. When the selected shift stage is not the first shift stage, the program proceeds to step 304. When the selected shift stage is the first shift stage, the program proceeds to step 305. At step 304, a signal is outputted for indicating the shift-down operation. The automatic clutch 20 is disengaged with the throttle valve 12 being closed, so that the power is not transmitted from the engine 10 to the input shaft 31. The relevant sleeves 33, 34, and 35 are shifted by the corresponding electric actuators of the electric actuators 42, 44, and 46, enabling the selected shift stage of the transmission 30 to be shifted down to a lower shift stage. The automatic clutch 20 is then re-engaged with the throttle valve 12 being opened under the control of the electric actuators 11, 21, 42, 44, 46. Therefore, the shift-down operation is performed from the selected shift stage of the transmission 30 to only a single lower shift stage. All the actuator movements are under the control of the electric controller 50. At step 305, the program maintains the selected shift stage at the first shift stage, so thatnone of the gear shift operations is performed.

At step 303, the program judges if the selected shift stage of the transmission 30 is the fifth shift stage or not, based upon the detected signal by the sensor S44. When the selected shift stage is not the fifth shift stage, the program proceeds to step 306. When the selected shift stage is the fifth shift stage, the program proceeds to step 307. At step 306, a signal is outputted for indicating the shift-up operation. The automatic clutch 20 is disengaged with the throttle valve 12 being closed, so that the power is not transmitted from the engine 10 to the input shaft 31. The relevant sleeves 33, 34, and 35 are shifted by the corresponding electric actuators of the electric actuators 42, 44, and 46, enabling the selected shift stage of the transmission 30 to be shifted up to a higher shift stage. The automatic clutch 20 isthen re-engaged with the throttle valve 12 being opened under the control of the electric actuators 11, 21, 42, 44, 46. Therefore, the shift-up operation is performed from the selected shift stage of the transmission 30 to an only single higher shift stage. All the actuator movements are under the control of the electric controller 50. At step 307, the program is performed to maintain the selected shift stage at the fifth shift stage, so thatnone of the gear shift operations is performed.

When the shift-up operation is performed from the first shift stage to the second shi ft stage, the first sleeve 33 operatively disposed between the gear set G1 and the gear set G4 is shifted from a first shift stage position to an intermediate position by the electric actuator 42. At the same time, the second sleeve 34 operatively disposed between the gear set G2 and the gear set G5 is shifted from an intermediate position to a second speed shift position by the electric actuator 44, wherein a power transmission path from the input shaft 31 to the output shaft 32 is established via the gear set G2. Accordingly, the shift operation from the first speed shift to the second speed shift is completed.

When the shift-up operation is performed from the second shift stage to the third shift stage, the second sleeve 34 operatively disposed between the gear set G2 and the gear set G5 is shifted from the second shift stage position to the intermediate position by the electric actuator 44. At the same time, the third sleeve 35 operatively disposed between the gear set G3 and the gear set Gr is shifted from an intermediate position to a third shift stage position by the electric actuator 46, wherein a power transmission path from the input shaft 31 to the output shaft 32 is established via the shift gear set G3. Accordingly, the shift operation from the second shift stage to the third shift stage is completed.

When the shift-up operation is performed from the third shift stage to the fourth shift stage, the third sleeve 35 operatively disposed between the gear set G3 and the gear set Gr is shifted from the third shift stage position to the intermediate position by the electric actuator 46. At the same time, the first sleeve 33 operatively disposed between the gear set G1 and the gear set G4 is shifted from the intermediate position to a fourth shift stage position by the electric actuator 42, wherein a power transmission path from the input shaft 31 to the output shaft 32 is established via the gear set G4. Accordingly, the shift operation from the third shift stage to the fourth shift stage is completed.

When the shift-up operation is performed from the fourth shift stage to the fifth shift stage, the first sleeve 33 operatively disposed between the gear set G1 and the gear set G4 is shifted from the fourth shift stage position to the intermediate position by the electric actuator 42. At the same time, the second sleeve 34 operatively disposed between the gear set G2 and the gear set G5 is shifted from the intermediate position to a fifth shift stage position by the electric actuator 44, wherein a power transmission path from the input shaft 31 to the output shaft 32 is performed via the gear set G5. Accordingly, the shift operation from the fourth shift stage to the fifth shift stage is completed.

When the shift-down operation is performed from the fifth shift stage to the fourth shift stage, the second sleeve 34 operatively disposed between the gear set G2 and the gear set G5 is shifted from the fifth shift stage position to the intermediate position by the electric actuator 44. At the same time, the first sleeve 33 operatively disposed between the gear set G1 and the gear set G4 is shifted from the intermediate position to the fourth shift stage position by the electric motor 42. Accordingly, the shift operation from the fifth shift stage to the fourth shift stage is completed.

When the shift-down operation is performed from the fourth shift stage to the third shift stage, the first sleeve 33 operatively disposed between the gear set G1 and the gear set G4 is shifted from the fourth shift stage position to the intermediate position by the electric actuator 42. At the same time, the third sleeve 35 operatively disposed between the gear set G3 and the gear set Gr is shifted from the intermediate position to the third shift stage position by the electric motor 46. Accordingly, the shift operation from the fourth shift stage to the third shift stage is completed.

When the shift-down operation is performed from the third shift stage to the second shift stage, the third sleeve 35 operatively disposed between the gear set G3 and the gear set Gr is shifted from the third shift stage position to the intermediate position by the electric actuator 46. At the same time, the second sleeve 34 operatively disposed between the gear set G2 and the sgear set G5 is shifted from the intermediate position to the second shift stage position by the electric actuator 44. Accordingly, the shift operation from the third shift stage to the second shift stage is completed.

When the shift-down operation is performed from the second shift stage to the first shift stage, the second sleeve 34 operatively disposed between the gear set G2 and the gear set G5 is shifted from the second shift stage position to the intermediate position by the electric actuator 44. At the same time, the first sleeve 33 operatively disposed between the gear set G1 and the gear set G4 is shifted from the intermediate position to the first shift stage position by the electric actuator 42. Accordingly, the shift operation from the second shift stage to the first shift stage is completed.

As described above, all the gear shift operations are performed by shifting two of the sleeves 33, 34 and 35 by the corresponding two of the electric actuators 42, 44 and 46 at the same time as described in our copending European Patent Application EP 1 184 597 A. Therefore, the shifting time can be reduced. For example, when the vehicle is accelerating and the gear shift operation is performed, the period of time during which the automatic clutch 20 is disengaged is reduced. This increases the time that the driving force (output) from the engine 10 is transmitted to the vehicle wheels, and the driving performance and the drivability is improved.

The above-described embodiment of the present invention employs the gear transmission 30 provided with the three pairs of gear sets (including six gear sets G1 through G5 and Gr) and the three sleeves 33, 34, and 35. As described, this provides the gear transmission 30 with five forward shift stages and a single rearward shift stage. However, the invention is also applicable to transmissions with four forward shift stages and a single rearward shift stage. In this case, first, second and third forward shift stages are employed as an underdrive shift stage, and a fourth forward shift stage is employed as an overdrive shift stage. This invention is further applicable to transmissions with six forward shift stages and a single rearward shift stage. In this case, first through fourth forward shift stages are respectively employed as the underdrive shift stage, and fifth and sixth forward shift stages are employed as the overdrive shift stage. Additionally, the invention is also applicable to an automatic gear transmission having a plurality of shift stages including a well-known planet gear mechanism as a main body, a torque converter, a plurality of hydraulic clutches, and a plurality of brake mechanisms.

The above-described embodiment of the present invention employs a transmission which performs the shift-down operation from the overdrive shift stage to the fourth shift stage only when the selected shift stage of the transmission 30 is the overdrive shift stage (the fifth shift stage), the vehicle hes been running at a higher vehicle speed than the predetermined vehicle speed (e.g. 70Km/H) for a longer period of time than a predetermined period of time, and the absolute value of the changing ratio of the vehicle speed is smaller than the predetermined changing ratio. However, this invention is applicable to a transmission which performs the shift-down operation without the judgment shown at step 114 of Fig. 4. This invention is further applicable to a transmission which performs the shift-down operation without the judgment shown at steps 113 and 114 of Fig. 4. In this case, steps 107 and 108 are excluded as well.

## Claims

1. A vehicle gear transmission (30) which is switchable by a switching means (41) between an automatic shift mode and a manual shift mode, comprising
a switch mode judging means (112) for judging that the transmission (30) has been switched from the automatic shift mode to the manual shift mode by the switching means (41),
a shift stage identification means (202) for identifying an existing shift stage of the transmission (30) as it is switched from the automatic shift mode to the manual shift mode by the switching means (41), and
a shift-down operating means (203) for shifting-down the transmission (30) from the existing shift stage when
the switch mode judging means (112) judges that the automatic shift mode has been switched to the manual shift mode by the switching means (41) and
the shift stage identification means (202) judges that the existing shift stage of the transmission (30) is equal to or higher than a predetermined shift stage as the transmission is switched from the automatic shift mode to the manual shift mode,
**CHARACTERISED IN THAT** the shift-down operating means (203) shifts-down the shift stage of the transmission (30) from the existing shift stage only when a vehicle speed judging means (106) judges that the vehicle speed of a vehicle incorporating the transmission is higher than a predetermined vehicle speed.

2. A vehicle gear transmission according to claim 1, further including a time judging means (113) associated with the vehicle speed judging means (106) for judging that the vehicle has been running at a vehicle speed higher than the predetermined speed for longer than a predetermined period of time, wherein the shift-down operating means (203) shifts-down the shift stage of the transmission (30) from the existing shift stage only when:
(a) the switch mode judging means (112) judges that the automatic shift mode has been switched to the manual shift mode by the switching means (41);
(b) the shift stage identification means (202) judges that the existing shift stage of the transmission (30) is equal to or higher than the predetermined shift stage as the transmission is switched from the automatic shift mode to the manual shift mode; and
(c) the time judging means (113) judges that the vehicle has been running at a vehicle speed higher than the predetermined speed for longer than the predetermined period of time.

3. A vehicle gear transmission according to claim 2, further including a vehicle speed changing ratio judging means (114) for judging that an absolute value of a changing ratio of the vehicle speed is smaller than a predetermined changing ratio, wherein the shift-down operating means (203) shifts-down the shift stage of the transmission (30) from the existing shift stage only when:
(a) the switch mode judging means (112) judges that the automatic shift mode has been switched to the manual shift mode by the switching means (41);
(b) the shift stage identification means (202) judges that the existing shift stage of the transmission (30) is equal to or higher than the predetermined shift stage as the transmission is switched from the automatic shift mode to the manual shift mode;
(c) the time judging means (113) judges that the vehicle has been running at a vehicle speed higher than the predetermined speed for longer than the predetermined period of time; and
(d) the vehicle speed changing ratio judging means (114) judges that the absolute value of the changing ratio of the vehicle speed is smaller than the predetermined changing ratio.

4. A vehicle gear transmission according to any of claims 1 to 3, wherein the predetermined shift stage is an overdrive shift stage.

5. A vehicle gear transmission according to any of claims 1 to 4, including a plurality of pairs of gear sets (G1 to G5 and Gr) for establishing or interrupting a power transmission path from an input shaft (31) to an output shaft (32) by axial movement of any of a plurality of sleeves (33, 34, 35) respectively disposed between the gear sets of each pair, wherein the power transmission path from the input shaft (31) to the output shaft (32) in any selected shift stage is established via a selected gear set by operation of a shift operating mechanism (40) controlling axial movement of the sleeves.

6. A vehicle gear transmission according to claim 5, wherein the shift operating mechanism includes electric actuators (44, 45, 46) for the sleeves, each sleeve being shifted by a corresponding one of the actuators (44, 45, 46).

7. A vehicle gear transmission according to claim 5 or claim 6, wherein the input shaft (31) is connected to an engine (10) by an automatic clutch (20).

## Patentansprüche

1. Fahrzeuggetriebe (30), das durch eine Schalteinrichtung (41) zwischen einem automatischen Schaltbetrieb und einem manuellen Schaltbetrieb umschaltbar ist,
umfassend:
eine Schaltbetriebsart-Beurteilungseinrichtung (112) zur Entscheidung, ob das Getriebe (30) von dem automatischen Schaltbetrieb auf den manuellen Schaltbetrieb durch die Schalteinrichtung (41) geschaltet worden ist,
eine Schaltstufe-Identifikationseinrichtung (202) zur Feststellung einer existierenden Schaltstufe (des eingelegten Ganges) des Getriebes (30), wenn es von dem automatischen Schaltbetrieb auf den manuellen Schaltbetrieb durch die Schalteinrichtung (41) geschaltet wird, und
eine Herunterschalten-Betätigungseinrichtung (203), um das Getriebe (30) von der existierenden Schaltstufe (dem eingelegten Gang) herunterzuschalten, wenn
die Schaltbetriebsart-Beurteilungseinrichtung (112) feststellt, dass der automatische Schaltbetrieb auf den manuellen Schaltbetrieb durch die Schalteinrichtung (41) umgeschaltet worden ist, und
die Schaltstufe-Identifikationseinrichtung (202) feststellt, dass die existierende Schaltstufe des Getriebes (30) gleich oder höher als eine vorbestimmte Schaltstufe ist, wenn das Getriebe von dem automatischen Schaltbetrieb auf den manuellen Schaltbetrieb umgeschaltet wird,
**dadurch gekennzeichnet,**
**dass** die Herunterschalten-Betätigungseinrichtung (203) die Schaltstufe des Getriebes (30) von der existierenden Schaltstufe nur dann herunterschaltet, wenn eine Fahrzeuggeschwindigkeit-Beurteilungseinrichtung (106) feststellt, dass die Fahrzeuggeschwindigkeit eines
das Getriebe umfassenden Fahrzeuges höher als eine vorbestimmte Fahrzeuggeschwindigkeit ist.

2. Fahrzeuggetriebe nach Anspruch 1,
ferner umfassend:
eine Zeitbeurteilungseinrichtung (113), die mit der Fahrzeuggeschwindigkeit-Beurteilungseinrichtung (106) zugeordnet ist, um festzustellen, ob das Fahrzeug mit einer Fahrzeuggeschwindigkeit höher als die vorbestimmte Geschwindigkeit für eine Zeit läuft, welche die vorbestimmte Zeitperiode übersteigt, wobei die Herunterschalten-Betätigungseinrichtung (203) die Schaltstufe des Getriebes (30) von der existierenden Schaltstufe nur dann herunterschaltet, wenn:
a) die Schaltbetriebsart-Beurteilungseinrichtung (112) feststellt, dass der automatische Schaltbetrieb auf den manuellen Schaltbetrieb durch die Schalteinrichtung (41) umgeschaltet worden ist;
b) die Schaltstufe-Identifikationseinrichtung (202) feststellt, dass die existierende Schaltstufe des Getriebes (30) gleich oder höher als die vorbestimmte Schaltstufe ist, wenn das Getriebe von dem automatischen Schaltbetrieb auf den manuellen Schaltbetrieb umgeschaltet wird; und
c) die Zeit-Beurteilungseinrichtung (113) feststellt, dass länger als die vorbestimmte Zeitperiode das Fahrzeug mit einer Fahrzeuggeschwindigkeit läuft, die höher ist als die vorbestimmte Geschwindigkeit.

3. Fahrzeuggetriebe nach Anspruch 2,
ferner umfassend:
eine Fahrzeuggeschwindigkeit-Änderungsverhältnis-Beurteilungseinrichtung (114) zur Feststellung, ob ein absoluter Wert eines Änderungsverhältnisses der Fahrzeuggeschwindigkeit kleiner als ein vorbestimmtes Änderungsverhältnis ist, wobei die Herunterschalten-Betätigungseinrichtung (203) die Schaltstufe des Getriebes (30) von der existierenden Schaltstufe nur dann herunterschaltet, wenn:
a) die Schaltbetriebsart-Beurteilungseinrichtung (112) feststellt, dass der automatische Schaltbetrieb in den manuellen Schaltbetrieb durch die Schalteinrichtung (41) umgeschaltet worden ist;
b) die Schaltstufe-Identifikationseinrichtung (202) feststellt, dass die existierende Schaltstufe des Getriebes (30) gleich oder höher als die vorbestimmte Schaltstufe ist, wenn das Getriebe von dem automatischen Schaltbetrieb auf den manuellen Schaltbetrieb umgeschaltet wird;
c) die Zeit-Beurteilungseinrichtung (113) feststellt, dass länger als die vorbestimmte Zeitperiode das Fahrzeug bei einer Fahrzeuggeschwindigkeit läuft, die höher ist als die vorbestimmte Geschwindigkeit ist; und
d) die Fahrzeuggeschwindigkeit-Änderungsverhältnis-Beurteilungseinrichtung (114) feststellt, dass der absolute Wert des Änderungsverhältnisses der Fahrzeuggeschwindigkeit kleiner als das vorbestimmte Änderungsverhältnis ist.

4. Fahrzeuggetriebe nach einem der Ansprüche 1 bis 3, worin die vorbestimmte Schaltstufe eine Overdrive-Schaltstufe ist.

5. Fahrzeuggetriebe nach einem der Ansprüche 1 bis 4, umfassend
eine Mehrzahl von Paaren von Zahnrädersätzen (G1-G5 und Gr) um einen Kraftübertragungsweg von einer Eingangswelle (31) auf eine Abtriebswelle (32) durch axiale Bewegung von Schalthülsen einer Mehrzahl von Schalthülsen (33, 34, 35) aufzubauen oder zu unterbrechen, die jeweils zwischen den Zahnrädersätzen jedes Paares angeordnet sind, wobei der Kraftübertragungsweg von der Eingangswelle (31) auf die Abtriebswelle (32) in jeder gewählten Schaltstufe über einen ausgewählten Zahnradsatz errichtet wird, indem ein Schaltbetätigungsmechanismus (40) betätigt wird, der die axiale Bewegung der Schalthülsen steuert.

6. Fahrzeuggetriebe nach Anspruch 5,
worin der Schaltbetätigungsmechanismus elektrische Aktuatoren (44, 45, 46) für die Schalthülsen umfasst und jede Schalthülse durch einen entsprechenden Aktuator (44, 45, 46) verschoben wird.

7. Fahrzeuggetriebe nach Anspruch 5 oder 6,
worin die Eingangswelle (31) mit einem Motor (10) über eine automatische Kupplung (20) verbunden ist.

## Revendications

1. Transmission de véhicule (30) qui peut être basculée par un moyen de basculement (41) entre un mode de changement de vitesse automatique et un mode de changement de vitesse manuel, comprenant
un moyen d'évaluation du mode de basculement (112) pour évaluer que la transmission (30) a été basculée du mode de changement de vitesse automatique au mode de changement de vitesse manuel par le moyen de basculement (41),
un moyen d'identification du rapport de vitesse (202) pour identifier un rapport de vitesse existant de la transmission (30) au moment où elle est basculée du mode de changement de vitesse automatique au mode de changement de vitesse manuel par le moyen de basculement (41), et
un moyen de commande de rétrogradation (203) pour rétrograder la transmission (30) depuis le rapport de vitesse existant lorsque
le moyen d'évaluation du mode de basculement (112) évalue que le mode de changement de vitesse automatique a été basculé sur le mode de changement de vitesse manuel par le moyen de basculement (41) et
le moyen d'identification du rapport de vitesse (202) évalue que le rapport de vitesse existant de la transmission (30) est égal ou supérieur à un rapport de vitesse prédéterminé lorsque la transmission est basculée du mode de changement de vitesse automatique au mode de changement de vitesse manuel,
**caractérisé en ce que** le moyen de commande de rétrogradation (203) rétrograde le rapport de vitesse de la transmission (30) depuis le rapport de vitesse existant uniquement lorsqu'un moyen d'évaluation de la vitesse du véhicule (106) évalue que la vitesse du véhicule d'un véhicule incorporant la transmission est supérieure à une vitesse de véhicule prédéterminée.

2. Transmission de véhicule selon la revendication 1, comprenant en outre un moyen d'évaluation du temps (113) associé au moyen d'évaluation de la vitesse du véhicule (106) pour évaluer que le véhicule a été conduit à une vitesse de véhicule supérieure à la vitesse prédéterminée pendant plus longtemps qu'une période prédéterminée, dans lequel le moyen de commande de rétrogradation (203) rétrograde le rapport de vitesse de la transmission (30) depuis le rapport de vitesse existant uniquement lorsque :
(a) le moyen d'évaluation du mode de basculement (112) évalue que le mode de changement de vitesse automatique a été basculé sur le mode de changement de vitesse manuel par le moyen de basculement (41) ;
(b) le moyen d'identification du rapport de vitesse (202) évalue que le rapport de vitesse existant de la transmission (30) est égal ou supérieur au rapport de vitesse prédéterminé lorsque la transmission est basculée depuis le mode de changement de vitesse automatique sur le mode de changement de vitesse manuel ; et
(c) le moyen d'évaluation de la vitesse (113) évalue que le véhicule a été conduit à une vitesse de véhicule supérieure à la vitesse prédéterminée pendant plus longtemps que la période prédéterminée.

3. Transmission de véhicule selon la revendication 2, comprenant en outre un moyen d'évaluation du rapport de changement de vitesse du véhicule (114) pour évaluer qu'une valeur absolue d'un rapport de changement de vitesse du véhicule est inférieure à un rapport de changement prédéterminé, dans lequel le moyen de commande de rétrogradation (203) rétrograde le rapport de vitesse de la transmission (30) depuis le rapport de vitesse existant uniquement lorsque :
(a) le moyen d'évaluation du mode de basculement (112) évalue que le mode de changement de vitesse automatique a été basculé sur le mode de changement de vitesse manuel par le moyen de basculement (41) ;
(b) le moyen d'identification du rapport de vitesse (202) évalue que le rapport de vitesse existant de la transmission (30) est égal ou supérieur au rapport de vitesse prédéterminé lorsque la transmission est basculée depuis le mode de changement de vitesse automatique sur le mode de changement de vitesse manuel ;
(c) le moyen d'évaluation du temps (113) évalue que le véhicule a été conduit à une vitesse de véhicule supérieure à la vitesse prédéterminée pendant plus longtemps qu'une période prédéterminée ; et
(d) le moyen d'évaluation du rapport de changement de vitesse du véhicule (114) évalue que la valeur absolue du rapport de changement de la vitesse du véhicule est inférieure au rapport de changement prédéterminé.

4. Transmission de véhicule selon l'une quelconque des revendications 1 à 3, dans laquelle le rapport de vitesse prédéterminé est un rapport de vitesse surmultiplié.

5. Transmission de véhicule selon l'une quelconque des revendications 1 à 4, comprenant une pluralité de paires de trains d'engrenages (E1 à E5 et Ema) pour établir ou interrompre un trajet de transmission de puissance depuis un arbre d'entrée (31) vers un arbre de sortie (32) par un mouvement axial de l'un quelconque d'une pluralité de manchons (33, 34, 35) respectivement agencés entre les trains d'engrenages de chaque paire, dans lequel le trajet de transmission de puissance depuis l'arbre d'entrée (31) vers l'arbre de sortie (32) dans un quelconque rapport de vitesse sélectionné est établi via un train d'engrenages sélectionné par l'opération d'un mécanisme de commande de changement de vitesse (40) commandant le mouvement axial des manchons.

6. Transmission de véhicule selon la revendication 5, dans lequel le mécanisme de commande de changement de vitesse comprend des actionneurs électriques (44, 45, 46) pour les manchons, chaque manchon étant déplacé par l'un correspondant des actionneurs (44, 45, 46).

7. Transmission de véhicule selon la revendication 5 ou la revendication 6, dans lequel l'arbre d'entrée (31) est relié à un moteur (10) par un embrayage automatique (20).
